# EUROPEAN PATENT APPLICATION

(11) **EP 4 752 617 A1**
(43) Date of publication of application: **03.06.2026**
(21) Application number: 24845632.9
(22) Date of filing: 23.07.2024
(51) Int. Cl.: G02B 6/44, G02B 6/02

(54) **COATED OPTICAL FIBER RIBBON AND METHOD FOR MANUFACTURING COATED OPTICAL FIBER RIBBON**

(30) Priority: 25.07.2023 JP 2023120859
(71) Applicant: Sumitomo Electric Industries, Ltd., Osaka-shi, Osaka 541-0041 (JP)
(72) Inventor: SHIOZAKI Manabu, Osaka-shi, Osaka 541-0041 (JP); KAKII Toshiaki, Osaka-shi, Osaka 541-0041 (JP); YOSHIKAWA Satoshi, Osaka-shi, Osaka 541-0041 (JP); KOHDA Hiroshi, Osaka-shi, Osaka 541-0041 (JP)
(74) Representative: Müller-Boré & Partner Patentanwälte PartG mbB
(86) International application number: PCT/JP2024/026362
(87) International publication number: WO 2025/023257

(57) **Abstract**

An optical fiber ribbon includes a plurality of multicore fibers each having a plurality of cores and cladding covering the plurality of cores, and a coating member at least partially covering the plurality of multicore fibers. In at least one multicore fiber among the plurality of multicore fibers, the plurality of cores is eight or more cores, and is arranged to be line-symmetric with respect to a reference line passing through a fiber center in a cross section of the at least one multicore fiber. Among the plurality of cores, the distance between the pair of adjustment cores located on the reference line and farthest from each other is larger than the maximum radius which is the distance between the fiber center and the outermost core farthest from the fiber center.

## Description

### Technical Field

The present disclosure relates to an optical fiber ribbon and a method for manufacturing an optical fiber ribbon.
The present application claims the priority based on Japanese Patent Application No. 2023-120859, filed on July 25, 2023, the entire contents of which are incorporated herein by reference.

### Background Art

Patent Literatures 1 and 2 disclose a ribbon fiber including a plurality of multicore fibers and a method for manufacturing the same. Patent Literature 3 discloses a multicore fiber alignment method. In the alignment method described in Patent Literature 3, the side surface of the multicore fiber is irradiated with illumination light, the displacement of the shadow of the core is detected by the imaging device, torsion of the multicore fiber is detected, and then the torsion is eliminated using the torsion elimination pulley.

### Citation List

### Patent Literature

Patent Literature 1: Japanese Unexamined Patent Publication No. 2017-173514
Patent Literature 2: WO 2016/047658 A
Patent Literature 3: Japanese Unexamined Patent Publication No. 2014-133673

### Summary of Invention

An optical fiber ribbon according to an embodiment of the present disclosure includes a plurality of multicore fibers each having a plurality of cores and cladding covering the plurality of cores, and a coating member at least partially covering the plurality of multicore fibers. In at least one multicore fiber among the plurality of multicore fibers, the plurality of cores is eight or more cores, and is arranged to be line-symmetric with respect to a reference line passing through a fiber center in a cross section of the at least one multicore fiber. Among the plurality of cores, the distance between the pair of adjustment cores located on the reference line and farthest from each other is larger than the maximum radius which is the distance between the fiber center and the outermost core farthest from the fiber center.

### Brief Description of Drawings

[FIG. 1] FIG. 1 is a cross-sectional view of an optical fiber ribbon according to an embodiment.
[FIG. 2] FIG. 2 is a diagram illustrating a method for manufacturing the optical fiber ribbon illustrated in FIG. 1.
[FIG. 3] FIG. 3 is a diagram for explaining a method of core alignment in a multicore fiber.
[FIG. 4] Parts (a), (b), and (c) of FIG. 4 are diagrams illustrating measurement results of symmetry in core alignment illustrated in FIG. 3.
[FIG. 5] FIG. 5 is a diagram illustrating an example of a relationship between asymmetry and a rotation angle.
[FIG. 6] FIG. 6 is a schematic diagram for explaining an inter-core distance dc and a core movement amount in a multicore fiber.
[FIG. 7] Part (a) of FIG. 7 illustrates a general core arrangement in a 12-core multicore fiber, and parts (b) and (c) of FIG. 7 illustrate a core arrangement in which an inter-core distance is increased in the 12-core multicore fiber.
[FIG. 8] Part (a) of FIG. 8 illustrates a general core arrangement in a 16-core multicore fiber, and parts (b), (c), (d), and (e) of FIG. 8 illustrate core arrangements at rotationally asymmetric positions by widening an inter-core distance in the 16-core multicore fiber.
[FIG. 9] Parts (a) and (b) of FIG. 9 illustrate a modification of the core arrangement in which the inter-core distance is increased in the 12-core multicore fiber, and parts (c) and (d) of FIG. 9 illustrate a modification of the core arrangement in which the inter-core distance is increased in the 16-core multicore fiber.
[FIG. 10] Part (a) of FIG. 10 illustrates a general core arrangement in an 8-core multicore fiber, and part (b) of FIG. 10 illustrates a core arrangement at rotationally asymmetric positions by widening an inter-core distance in the 8-core multicore fiber.

### Description of Embodiments

### [Problem to be Solved by Present Disclosure]

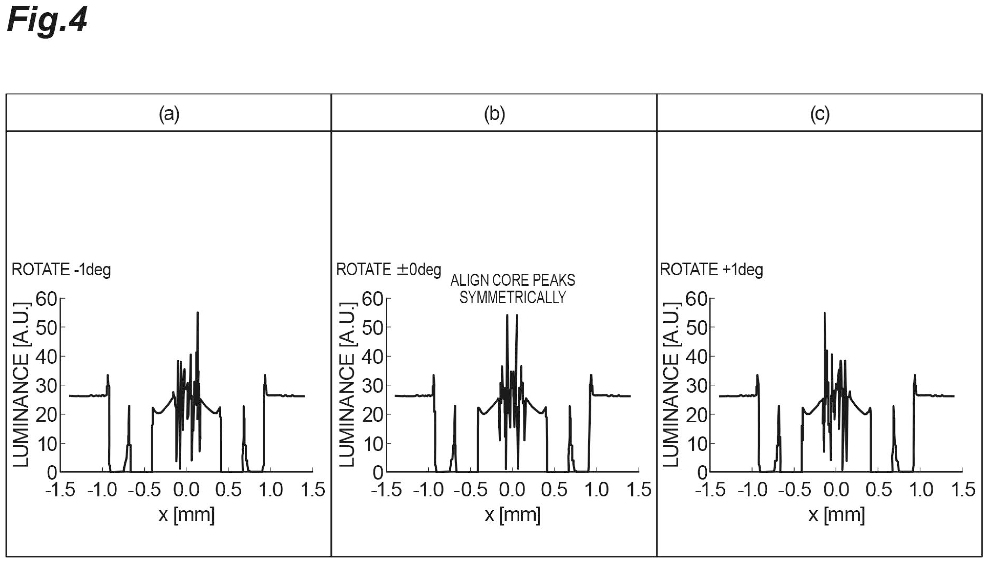

When manufacturing the ribbon fiber described in Patent Literatures 1 and 2, the rotation direction may be adjusted around the fiber center of each multicore fiber. In this case, for example, as described in Patent Literature 3, the side surface of the multicore fiber is irradiated with illumination light, and whether or not the core arrangement in the fiber is appropriate is detected from the symmetry or asymmetry of the transmitted light including the image of the core (see, for example, parts (a) to (c) of FIG. 4), and the rotation is adjusted. However, as the number of cores arranged in one multicore fiber increases to more than seven, for example, 12 or 16, the distance between the cores arranged in a line used as the reference for the above-described adjustment (hereinafter, referred to as an "adjustment core") decreases. The value of the asymmetry of the transmitted light is proportional to a value obtained by multiplying the distance between the adjustment cores and the rotation angle at the time of adjustment. For this reason, when the distance between the adjustment cores is shortened, it becomes difficult to adjust the asymmetry, and the detection accuracy of the core position in each multicore fiber decreases. Therefore, there is a demand for a method capable of accurately detecting a core position in a ribbon fiber including a plurality of multicore fibers. Although there may be more than two adjustment cores, in this case, a pair having the largest distance between the adjustment cores, that is, a pair positioned on the outermost side is most effective for adjusting the asymmetry.

### [Effects of Present Disclosure]

According to the present disclosure, it is possible to accurately detect a core position in a ribbon fiber including a plurality of multicore fibers.

### [Description of Embodiment of Present Disclosure]

First, the contents of an embodiment of the present disclosure are enumerated and described.
[1] An optical fiber ribbon according to an embodiment includes a plurality of multicore fibers each having a plurality of cores and cladding covering the plurality of cores, and a coating member at least partially covering the plurality of multicore fibers. In at least one multicore fiber among the plurality of multicore fibers, the plurality of cores is eight or more cores, and is arranged to be line-symmetric with respect to a reference line passing through a fiber center in a cross section of the at least one multicore fiber. Among the plurality of cores, the distance between the pair of adjustment cores located on the reference line and farthest from each other is larger than the maximum radius which is the distance between the fiber center and the outermost core farthest from the fiber center.
   In the optical fiber ribbon according to [1], the distance between the pair of adjustment cores located on the reference line and farthest from each other among the plurality of cores is larger than the maximum radius which is the distance between the fiber center and the outermost core farthest from the fiber center in the radial direction among the plurality of cores. In this case, even if the number of cores is large in the multicore fiber having eight or more cores, the asymmetry can be easily adjusted, and the detection accuracy of the core position in the multicore fiber can be improved. Therefore, according to this optical fiber ribbon, it is possible to accurately detect a core position in a ribbon fiber including a plurality of multicore fibers.
[2] In the optical fiber ribbon according to [1], at least one core of the pair of adjustment cores may be disposed on the circumference centered on the fiber center on which the outermost core is disposed. In this case, since the distance between the pair of adjustment cores can be made longer, the asymmetry can be easily adjusted even if the number of cores is large. Therefore, according to this optical fiber ribbon, the core position can be detected more accurately.
[3] In the optical fiber ribbon according to [1] or [2], in the at least one multicore fiber, the plurality of cores may be disposed so as to be rotationally asymmetric in a case where the plurality of cores rotates about the fiber center at an angle of 360/n degrees (n is any integer of 2 or more). In this case, since the cores are arranged rotationally asymmetric, alignment can be performed by easily determining a rotation direction for core alignment.
[4] In the optical fiber ribbon according to any one of [1] to [3], the plurality of cores may be 12 cores. In this case, even if the number of cores is large in the 12-core multicore fiber, the asymmetry can be easily adjusted, and the detection accuracy of the core position in the multicore fiber can be improved.
[5] In the optical fiber ribbon according to any one of [1] to [3], the plurality of cores may be 16 cores. In this case, even if the number of cores is large in the 16-core multicore fiber, the asymmetry can be easily adjusted, and the detection accuracy of the core position in the multicore fiber can be improved.
[6] A method for manufacturing an optical fiber ribbon according to an embodiment includes, preparing a plurality of multicore fibers each having a plurality of cores and cladding covering the plurality of cores, covering each of the plurality of multicore fibers with a resin while arranging the plurality of multicore fibers in parallel with each other, and irradiating a light-irradiated surface in a coating resin portion covering at least one multicore fiber among the plurality of multicore fibers with light and aligning an arrangement of the plurality of cores in the at least one multicore fiber based on a result of the light irradiation. In at least one multicore fiber, the plurality of cores is eight or more cores, and is arranged to be line-symmetric with respect to a reference line passing through a fiber center in a cross section of the at least one multicore fiber. Among the plurality of cores, the distance between the pair of adjustment cores located on the reference line and farthest from each other is larger than the maximum radius which is the distance between the fiber center and the outermost core farthest from the fiber center. In this manufacturing method, in the aligning the arrangement of the cores, at least one multicore fiber is arranged such that the reference line of the at least one multicore fiber intersects the light-irradiated surface, the light-irradiated surface in the coating resin portion is irradiated with light, and the plurality of cores of the at least one multicore fiber is aligned using the image transmitted through the pair of adjustment cores.

In the method for manufacturing an optical fiber ribbon according to [6], when aligning the cores, in the multicore fiber to be irradiated with light, the plurality of cores is eight or more cores, and is arranged to be line-symmetric with respect to a reference line passing through a fiber center in a cross section of the at least one multicore fiber. In addition, the distance between the pair of adjustment cores located on the reference line and farthest from each other among the plurality of cores is larger than the maximum radius which is the distance between the fiber center and the outermost core farthest from the fiber center in the radial direction among the plurality of cores. In this case, even if the number of cores is large in the multicore fiber having eight or more cores (for example, 8 cores, 12 cores, or 16 cores), the asymmetry can be easily adjusted, and the detection accuracy of the core position in the multicore fiber can be improved. Therefore, according to this optical fiber ribbon, it is possible to accurately detect a core position in a ribbon fiber including a plurality of multicore fibers.

### [Details of Embodiment of Present Disclosure]

Specific examples of an optical fiber ribbon and a method for manufacturing the optical fiber ribbon according to an embodiment of the present disclosure will be described below with reference to the accompanying drawings. In the following description, the same reference signs will be used for the same elements or elements having the same functions, and redundant description will not be given. The present invention is not limited to these examples, indicated by the claims, and intended to include all modifications within the meaning and scope equivalent to the claims.

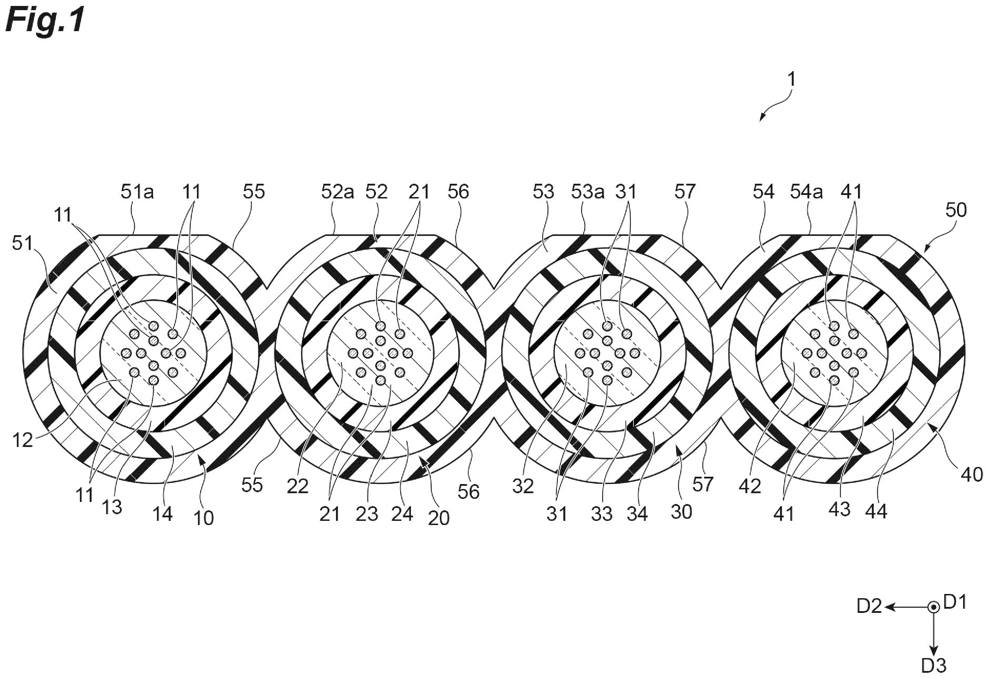

An exemplary optical fiber ribbon according to an embodiment will be described with reference to FIG. 1. FIG. 1 is a cross-sectional view of an optical fiber ribbon according to an embodiment. As illustrated in FIG. 1, an optical fiber ribbon 1 includes a plurality of multicore fibers 10, 20, 30, and 40 and a coating member 50. Each of the multicore fibers 10 to 40 extends along a first direction D1. In addition, each of the multicore fibers 10 to 40 is arranged in parallel along a second direction D2, and is entirely covered by the coating member 50. The optical fiber ribbon 1 is, for example, a four-fiber ribbon fiber, and recesses 55, 56, and 57 are provided between the fibers to enable single core separation. The optical fiber ribbon 1 is not necessarily provided with the recesses 55 to 57.

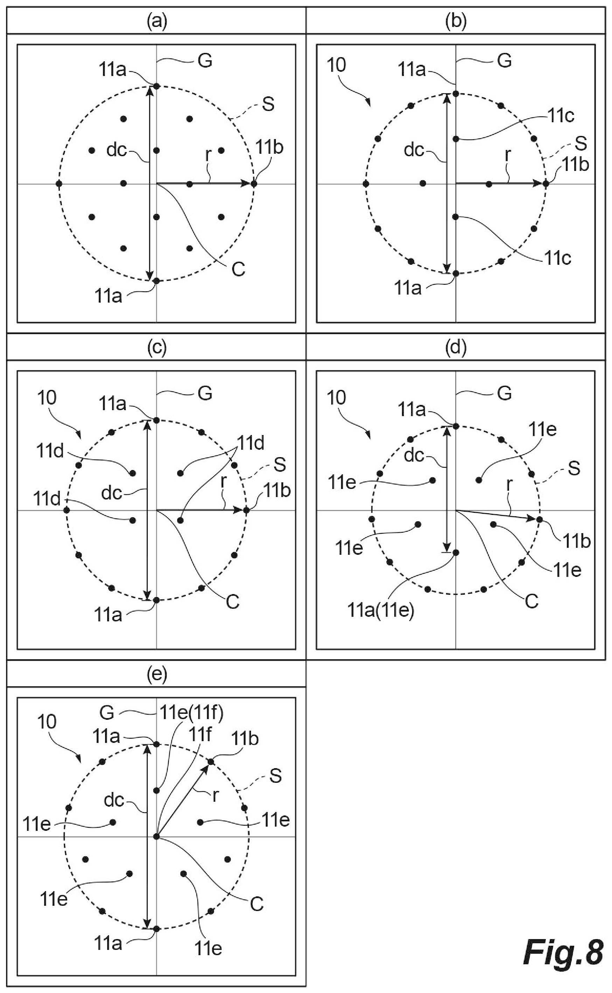

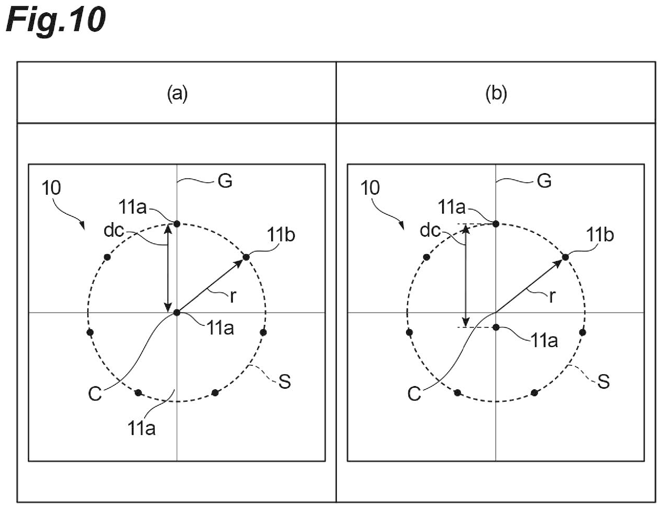

The multicore fiber 10 includes a plurality of cores 11, cladding 12 covering the plurality of cores 11, a primary resin layer 13 covering the cladding 12, and a secondary resin layer 14 covering the primary resin layer 13. In the multicore fiber 10, for example, among 12 cores 11, eight cores 11 are arranged at equal intervals on the outer circumference, and four cores 11 are arranged at equal intervals on the inner circumference in line symmetry. The line serving as a reference of line symmetry referred to herein is an observation axis when the multicore fiber is rotated to inspect the core arrangement when the optical fiber ribbon 1 is manufactured, and is, for example, a line orthogonal to (intersecting) the light-irradiated surface 51a of the coating member 50 and passing through the fiber center of the multicore fiber 10. Such a reference line extends, for example, along a third direction D3. The diameter of the core 11 may be, for example, 5 µm to 15 µm. The diameter of the cladding 12 may be, for example, 120 µm to 130 µm, or 170 µm to 190 µm. The number of cores 11 is 12 cores in the example illustrated in FIG. 1, but is not limited thereto, and may be 8 cores or 16 cores (see FIGS. 8 and 10). The core arrangement in each multicore fiber will be described later in detail.

The core 11 is formed of pure silica (SiO₂) glass or a material in which silica glass contains germanium dioxide or a fluorine element. The cladding 12 is lower in refractive index than the core 11. The cladding 12 is formed of pure silica glass or a material in which a fluorine element is added to silica glass, for example. A trench lower in refractive index than the cladding 12 may be provided between each core 11 and the cladding 12.

The primary resin layer 13 covers the outer circumference of the cladding 12. More specifically, the primary resin layer 13 is in contact with the outer circumferential face of the cladding 12 and covers the entirety of the cladding 12. The secondary resin layer 14 further covers the outer circumference of the primary resin layer 13. More specifically, the secondary resin layer 14 is in contact with the outer circumferential face of the primary resin layer 13 and covers the entirety of the primary resin layer 13.

The primary resin layer 13 can be formed by curing an ultraviolet curable resin composition containing a photopolymerizable compound, a photopolymerization initiator, and a silane coupling agent. As the photopolymerizable compound, urethane (meth) acrylate or epoxy (meth) acrylate can be used, for example. The secondary resin layer 14 can be formed by curing a resin composition containing a urethane (meth) acrylate, a monomer, and a photopolymerization initiator. The secondary resin layer 14 is higher in elastic modulus than the primary resin layer 13, and the secondary resin layer 14 is harder than the primary resin layer 13. The primary resin layer 13 and the secondary resin layer 14 each has a thickness of 5 µm or more and 50 µm or less, for example.

The multicore fiber 20 includes, similarly to the multicore fiber 10, a plurality of cores 21, cladding 22 covering the plurality of cores 21, a primary resin layer 23 covering the cladding 22, and a secondary resin layer 24 covering the primary resin layer 23. The multicore fiber 30 includes, similarly to the multicore fiber 10, a plurality of cores 31, cladding 32 covering the plurality of cores 31, a primary resin layer 33 covering the cladding 32, and a secondary resin layer 34 covering the primary resin layer 33. The multicore fiber 40 includes, similarly to the multicore fiber 10, a plurality of cores 41, cladding 42 covering the plurality of cores 41, a primary resin layer 43 covering the cladding 42, and a secondary resin layer 44 covering the primary resin layer 43. The cores, the claddings, the primary resin layers, and the secondary resin layers of the multicore fibers 20 to 40 have the same structures as the cores 11, the cladding 12, the primary resin layer 13, and the secondary resin layer 14 of the multicore fiber 10, respectively, and thus, detailed description thereof is omitted. The plurality of cores in each of the multicore fibers 20 to 40 may be 12 cores or may be 8 or 16 cores.

The coating member 50 is formed of a ribbon resin. For example, the ribbon resin may contain a thermosetting resin such as a silicone resin, an epoxy resin, or a urethane resin, or an ultraviolet curable resin such as an epoxy acrylate, a urethane acrylate, or a polyester acrylate, from the viewpoint of the damage preventing property and the splitting ease of the optical fibers. The coating member 50 includes a coating portion 51 covering the multicore fiber 10, a coating portion 52 covering the multicore fiber 20, a coating portion 53 covering the multicore fiber 30, and a coating portion 54 covering the multicore fiber 40. The coating portions 51 to 54 are in contact with the outer circumferential face of the corresponding multicore fibers (outer circumferential face of each secondary resin layer, and outer circumferential face of colored ink layer if there is a colored ink layer) and cover the entire multicore fiber.

The coating portion 51 has a shape substantially corresponding to the outer circumference shape of the multicore fiber 10 being covered, and has, for example, a substantially circular cross-sectional shape. Similarly, the coating portion 52, the coating portion 53, and the coating portion 54 have shapes substantially corresponding to the outer circumference shapes of the multicore fiber 20, the multicore fiber 30, and the multicore fiber 40 to be covered, respectively, and have, for example, a substantially circular cross-sectional shape.

In addition, the light-irradiated surfaces 51a, 52a, 53a, and 54a formed of flat surfaces are formed on the coating portion 51, the coating portion 52, the coating portion 53, and the coating portion 54, respectively. The light-irradiated surfaces 51a to 54a may be curved surfaces instead of flat surfaces. The light-irradiated surface 51a is provided in a region where a reference line (center line) passing through the fiber center and two or more cores 11 intersects the outer circumference of the coating portion 51. In other words, the light-irradiated surface 51a is provided on one side (upper side in the drawing) in a third direction D3 with respect to the core 11. Similarly to the light-irradiated surface 51a, each of the light-irradiated surfaces 52a to 54a is provided in regions where reference lines (center lines) passing through each fiber center and two or more cores 21, 31, and 41 intersect the outer circumferences of the coating portion 52, the coating portion 53, and the coating portion 54, respectively.

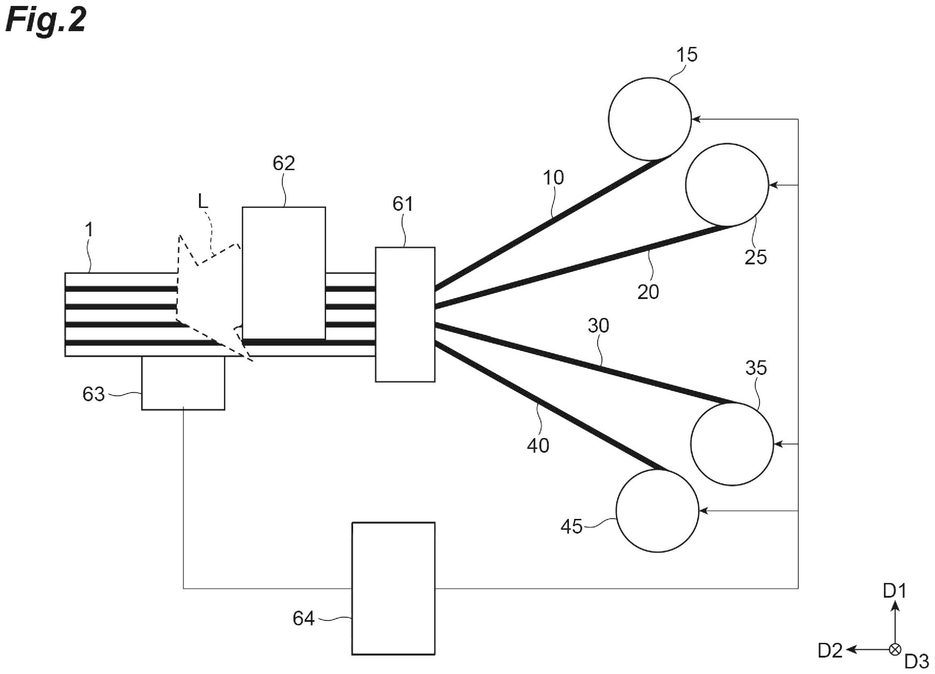

Next, a method for manufacturing the above-described optical fiber ribbon 1 will be described with reference to FIG. 2. FIG. 2 is a schematic diagram illustrating a method for manufacturing the optical fiber ribbon illustrated in FIG. 1. In order to manufacture the optical fiber ribbon 1, first, the multicore fibers 10, 20, 30, and 40 are prepared. The multicore fibers 10 to 40 are in a state of being wound around corresponding supply rolls 15, 25, 35, and 45, respectively, and each fiber is in a state of being drawn out from each roll.

In this manner, the multicore fibers 10, 20, 30, and 40 drawn out from the supply rolls 15, 25, 35, and 45, respectively, are covered with the resin while being arranged in parallel with each other along the second direction D2 in a die 61. This resin is a ribbon resin for forming the coating member 50, and contains a thermosetting resin such as a silicone resin, an epoxy resin, or a urethane resin, or an ultraviolet curable resin such as an epoxy acrylate, a urethane acrylate, or a polyester acrylate. Such a resin is introduced into the die 61, and the multicore fibers 10 to 40 aligned in the die 61 are coated with the ribbon resin and covered. Thereafter, the coated resin is irradiated with ultraviolet rays (not illustrated), and the ribbon resin is cured.

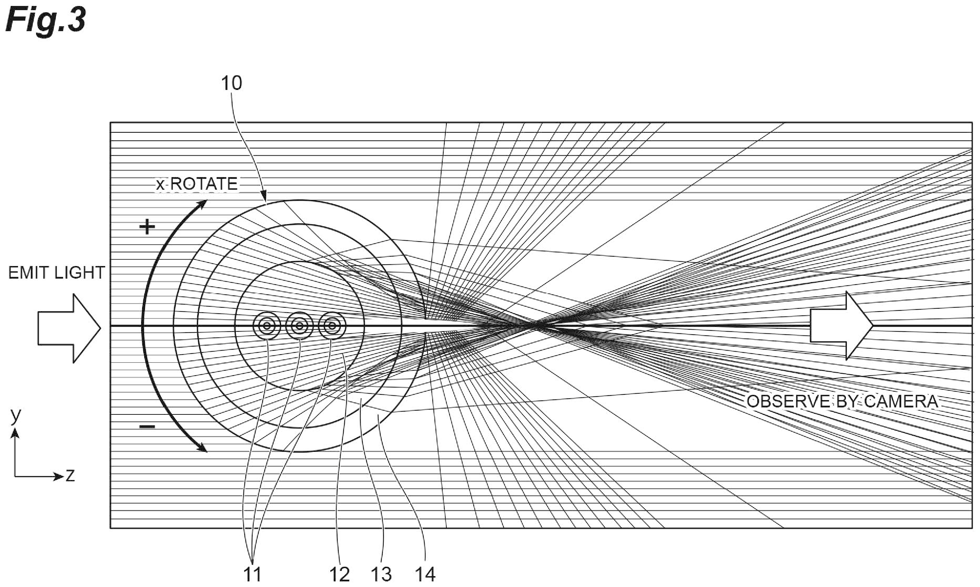

If the coating member 50 is formed, as illustrated in FIGS. 2 and 3, the light-irradiated surfaces 51a, 52a, 53a, and 54a in the coating resin portion covering the multicore fibers 10, 20, 30, and 40 are irradiated with the illumination light L from a light irradiation device 62, and luminance data that is a shadow of light transmitted through the optical fiber ribbon 1 is received by a light receiving device 63. The light receiving device 63 is, for example, a camera. In FIG. 3, the number of cores along the reference line is limited to three to facilitate the description. The light received by the light receiving device 63 can be expressed as, for example, luminance data illustrated in parts (a) to (c) of FIG. 4. The luminance data illustrated in parts (a) to (c) of FIG. 4 is a graph of luminance data corresponding to a multicore fiber when rotation adjustment is performed, and a protruding portion at the center corresponds to three cores illustrated in FIG. 3. In the part (b) of FIG. 4, this central portion has symmetry and clearly protrudes, indicating that a plurality of cores on the reference line are aligned. On the other hand, in the parts (a) and (c) of FIG. 4, the symmetry of the central portion is broken to have asymmetry, indicating that the plurality of cores on the reference line is not aligned (shifted). By detecting whether or not the graph of the luminance data has symmetry or the like, it is possible to determine whether or not the arrangement of the cores is aligned in the multicore fibers 10 to 40. Details of the core arrangement for improving the detection accuracy of such core arrangement will be described later.

Then, a plurality of cores in each of the multicore fibers 10, 20, 30, and 40 are aligned based on a result of light irradiation (graph of luminance data). In this alignment, the luminance data from the light receiving device 63 is analyzed by a controller 64, and the angle or the like of the supply rolls 15, 25, 35, and 45 is finely adjusted by a motor (not illustrated) or the like so that the luminance data has symmetry based on the analysis result. As a result, the position of the core is adjusted.

In such irradiation of the illumination light, in the manufacturing method according to the present embodiment, the inside of the multicore fiber is irradiated from the light-irradiated surfaces 51a, 52a, 53a, and 54a provided corresponding to the multicore fibers 10, 20, 30, and 40, and the multicore fiber is rotated until each of the transmitted light of the multicore fiber has a shape having symmetry (for example, the shape in part (b) of FIG. 4) to perform alignment. Hereinafter, the relationship with the core arrangement when performing fiber alignment will be described.

First, with reference to FIGS. 3 to 5, a method will be described in which side surfaces of a multicore fiber are irradiated with illumination light to acquire luminance data, and core alignment of the multicore fiber is performed using symmetry of the luminance data. FIG. 3 is a diagram for explaining core alignment of a multicore fiber. Parts (a), (b), and (c) of FIG. 4 are diagrams illustrating the measurement results of the symmetry in the core alignment illustrated in FIG. 3, and illustrate cases where the alignment angle is -1 deg, ±0 deg, and +1 deg, respectively. As illustrated in FIG. 3, a multicore fiber includes a plurality of cores 11, cladding 12 covering the cores 11, a primary resin layer 13, and a secondary resin layer 14. Here, for ease of description, three cores 11 are used, but the same applies to a case where more cores 11 are provided. The side of such a multicore fiber 10 is irradiated with the illumination light L, and transmitted light is received by a camera as a light receiving device to perform observation. A graph of luminance data received by such a camera is, for example, as illustrated in parts (a) to (c) of FIG. 4. Then, the multicore fiber 10 is slightly rotated in the plus (+) or minus (-) direction illustrated in FIG. 3 to perform alignment such that the graph of the luminance data has symmetry as illustrated in part (b) of FIG. 4.

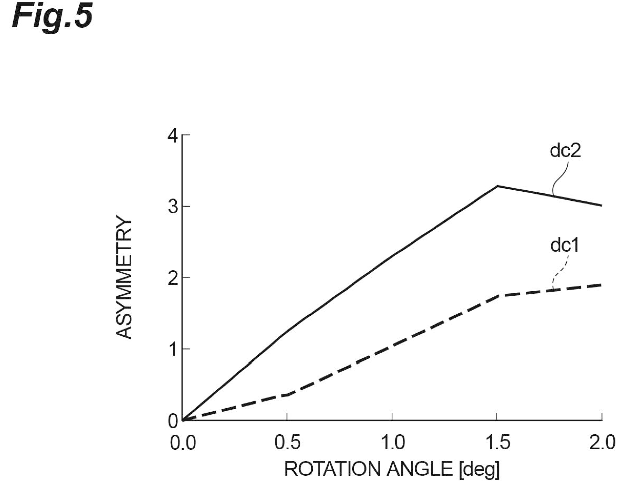

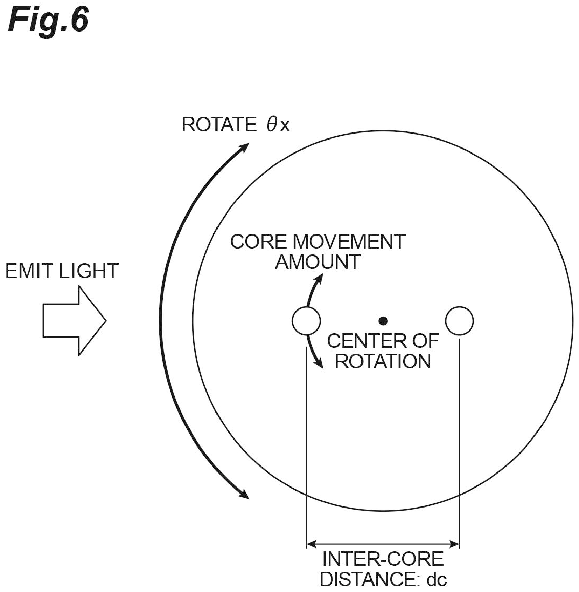

FIG. 5 is a graph illustrating the symmetry of the luminance data in relation to the rotation angle. The graph of FIG. 5 illustrates the relationship between the asymmetry and the rotation angle in a case where the maximum distance dc (see FIG. 6) between the cores to be aligned is changed. dc1 is a graph in a case where the inter-core distance dc is 40 µm, and dc2 is a graph in a case where the inter-core distance dc is 80 µm. As is clear from these graphs, it is clear that the asymmetry can be adjusted more greatly and the core position can be easily adjusted as the rotation angle increases in dc2 having a larger inter-core distance. FIG. 6 illustrates the core movement amount and the inter-core distance dc when the multicore fiber is rotated.

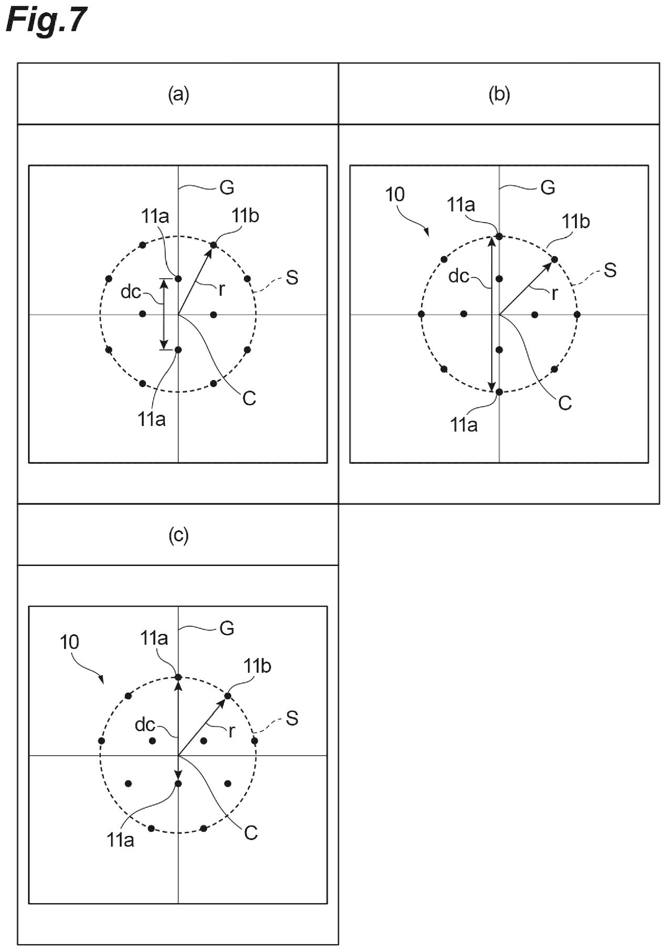

Here, the arrangement of a plurality of cores including a pair of adjustment cores to be irradiated with light will be described with reference to FIG. 7. In the following description, the multicore fiber 10 will be described as an example, but the same applies to the multicore fibers 20, 30, and 40. Part (a) of FIG. 7 illustrates a general core arrangement in a 12-core multicore fiber, and parts (b) and (c) of FIG. 7 illustrate a core arrangement in which an inter-core distance is increased in the 12-core multicore fiber. Black dots illustrated in parts (a) to (c) of FIG. 7 indicate cores in the multicore fiber.

In the part (a) of FIG. 7, the 12 cores 11 are arranged so as to be line-symmetric (left-right symmetric) with respect to the observation axis G orthogonal to the light-irradiated surface 51a and passing through the fiber center C of the multicore fiber. In addition, in this multicore fiber, the number of adjustment cores 11a arranged on the observation axis G is two, and the distance dc between the pair of adjustment cores 11a is smaller than the maximum radius r which is the distance between the fiber center C and the outermost core 11b farthest from the fiber center C in the radial direction among the plurality of cores 11. Specifically, in this example, if the minimum distance (core pitch) between the cores is 1, the maximum radius r is 1.58, whereas the inter-core distance dc is 1.41. In this case, since the distance dc between the adjustment cores 11a is shorter than the maximum radius r, it is not necessarily easy to eliminate the asymmetry.

In the part (b) of FIG. 7, similarly, the 12 cores 11 are arranged so as to be line-symmetric (left-right symmetric) with respect to the observation axis G (reference line) orthogonal to the light-irradiated surface 51a and passing through the fiber center C of the multicore fiber 10. On the other hand, in the multicore fiber 10, the number of the adjustment cores 11a arranged on the observation axis G is four, and among them, a pair of the adjustment cores 11a is arranged at the position of the outer circumference S. According to the multicore fiber 10 having such a core arrangement, the distance dc between the pair of adjustment cores 11a located outermost is larger than the maximum radius r which is the distance between the fiber center C and the outermost core 11b farthest from the fiber center C in the radial direction among the plurality of cores 11. Specifically, in this example, if the minimum distance (core pitch) between the cores is 1, the maximum radius r is 1.71, whereas the inter-core distance dc is 3.41. In this case, since the distance dc between the adjustment cores 11a is longer than the maximum radius r, it is easy to eliminate the asymmetry and alignment can be performed accurately.

Similarly, in the example illustrated in the part (c) of FIG. 7, the 12 cores 11 are arranged so as to be line-symmetric (left-right symmetric) with respect to the observation axis G orthogonal to the light-irradiated surface 51a and passing through the fiber center C of the multicore fiber 10. On the other hand, in the multicore fiber 10, the number of the adjustment cores 11a arranged on the observation axis G is two, and one of the pair of the adjustment cores 11a is arranged on the outer circumference S, and the other one is arranged inside the outer circumference S. However, in the multicore fiber 10 having this core arrangement, the distance dc between the pair of adjustment cores 11a is larger than the maximum radius r which is the distance between the fiber center C and the outermost core 11b farthest from the fiber center C in the radial direction among the plurality of cores 11. Specifically, in this example, if the minimum distance (core pitch) between the cores is 1, the maximum radius r is 1.53, whereas the inter-core distance dc is 1.73. In this case, since the distance dc between the adjustment cores 11a is longer than the maximum radius r, it is easy to eliminate the asymmetry and alignment can be performed accurately. Further, in the example illustrated in part (c) of FIG. 7, the plurality of cores 11 is arranged rotationally asymmetric. In this case, the rotation direction for alignment can be easily determined.

Next, another example of the arrangement of the plurality of cores including the pair of adjustment cores to be irradiated with light will be described with reference to FIG. 8. In the following description, the multicore fiber 10 will be described as an example, but the same applies to the multicore fibers 20, 30, and 40. Part (a) of FIG. 8 illustrates a general core arrangement in a 16-core multicore fiber, and parts (b), (c), (d), and (e) illustrate core arrangements widening an inter-core distance in the 16-core multicore fiber. Black dots illustrated in parts (a) to (e) of FIG. 8 indicate cores in the multicore fiber.

In the part (a) of FIG. 8, 16 cores 11 are arranged so as to be line-symmetric (left-right symmetric) with respect to the observation axis G orthogonal to the light-irradiated surface 51a and passing through the fiber center C of the multicore fiber. On the other hand, in this multicore fiber 10, the number of adjustment cores 11a arranged on the observation axis G is four, and the distance dc between the pair of adjustment cores 11a located on the outermost side is larger than the maximum radius r which is the distance between the fiber center C and the outermost core 11b farthest from the fiber center C in the radial direction among the plurality of cores 11. Specifically, in this example, if the minimum distance (core pitch) between the cores is 1, the maximum radius r is 2.12, whereas the inter-core distance dc is 4.24, and the asymmetry can be easily eliminated. However, in this example, the cores 11 are arranged to be rotationally symmetric. In this case, the rotation direction for alignment is not necessarily easily determined.

In the example illustrated in the part (b) of FIG. 8, similarly, 16 cores 11 are arranged so as to be line-symmetric (left-right symmetric) with respect to the observation axis G orthogonal to the light-irradiated surface 51a and passing through the fiber center C of the multicore fiber 10. On the other hand, in the multicore fiber 10, the number of the adjustment cores 11a arranged on the observation axis G is four, and while a pair of adjustment cores 11a positioned on the outermost side is arranged on the outer circumference S, one of the other cores 11c arranged on the observation axis G is moved outward in the radial direction (upward in the drawing) on the observation axis G from the arrangement structure illustrated in the part (a) of FIG. 8. With such an arrangement, in the example illustrated in part (b) of FIG. 8, the cores 11 are arranged rotationally asymmetric. In this case, the rotation direction for alignment can be easily determined. In this example, for example, if the minimum distance (core pitch) between the cores is 1, the maximum radius r is 1.93, whereas the inter-core distance dc is 3.86, so that the asymmetry can be easily eliminated and alignment can also be accurately performed.

Similarly, in the example illustrated in the part (c) of FIG. 8, the 16 cores 11 are arranged so as to be line-symmetric (left-right symmetric) with respect to the observation axis G orthogonal to the light-irradiated surface 51a and passing through the fiber center C of the multicore fiber 10. On the other hand, in the multicore fiber 10, the number of the adjustment cores 11a arranged on the observation axis G is two, and the four cores 11d located inside are arranged above the multicore fiber while the pair of adjustment cores 11a is arranged on the outer circumference S. With such an arrangement, in the example illustrated in part (c) of FIG. 8, the cores 11 are arranged rotationally asymmetric. In this case, the rotation direction for alignment can be easily determined. In this example, for example, if the minimum distance (core pitch) between the cores is 1, the maximum radius r is 1.93, whereas the inter-core distance dc is 3.86, so that the asymmetry can be easily eliminated and alignment can also be accurately performed.

Similarly, in the example illustrated in the part (d) of FIG. 8, the 16 cores 11 are arranged so as to be line-symmetric (left-right symmetric) with respect to the observation axis G orthogonal to the light-irradiated surface 51a and passing through the fiber center C of the multicore fiber 10. On the other hand, in the multicore fiber 10, the number of the adjustment cores 11a arranged on the observation axis G is two, the first adjustment core of the pair of adjustment cores 11a is arranged on the outer circumference S, the second adjustment core is arranged in the outer circumference S, and the pentagonal shape is formed by the five cores 11e (including the second adjustment core 11a) located inside. With such an arrangement, in the example illustrated in part (d) of FIG. 8, the cores 11 are arranged rotationally asymmetric. In this case, the rotation direction for alignment can be easily determined. In this example, for example, if the minimum distance (core pitch) between the cores is 1, the maximum radius r1 is 1.81, whereas the inter-core distance dc is 2.71, so that the asymmetry can be easily eliminated and alignment can also be accurately performed.

Similarly, in the example illustrated in the part (e) of FIG. 8, the 16 cores 11 are arranged so as to be line-symmetric (left-right symmetric) with respect to the observation axis G orthogonal to the light-irradiated surface 51a and passing through the fiber center C of the multicore fiber 10. On the other hand, in the multicore fiber 10, the number of the adjustment cores 11a arranged on the observation axis G is four, and a pair of the adjustment cores 11a located on the outermost side is arranged on the outer circumference S, and two more cores 11f are arranged on the observation axis G, such that a pentagonal shape is formed by five cores 11e (one core 11f is shared) positioned on the inner side. With such an arrangement, in the example illustrated in part (e) of FIG. 8, the cores 11 are arranged rotationally asymmetric. In this case, the rotation direction for alignment can be easily determined. In this example, for example, if the minimum distance (core pitch) between the cores is 1, the maximum radius r1 is 2.00, whereas the inter-core distance dc is 4.00, so that the asymmetry can be easily eliminated and alignment can also be accurately performed.

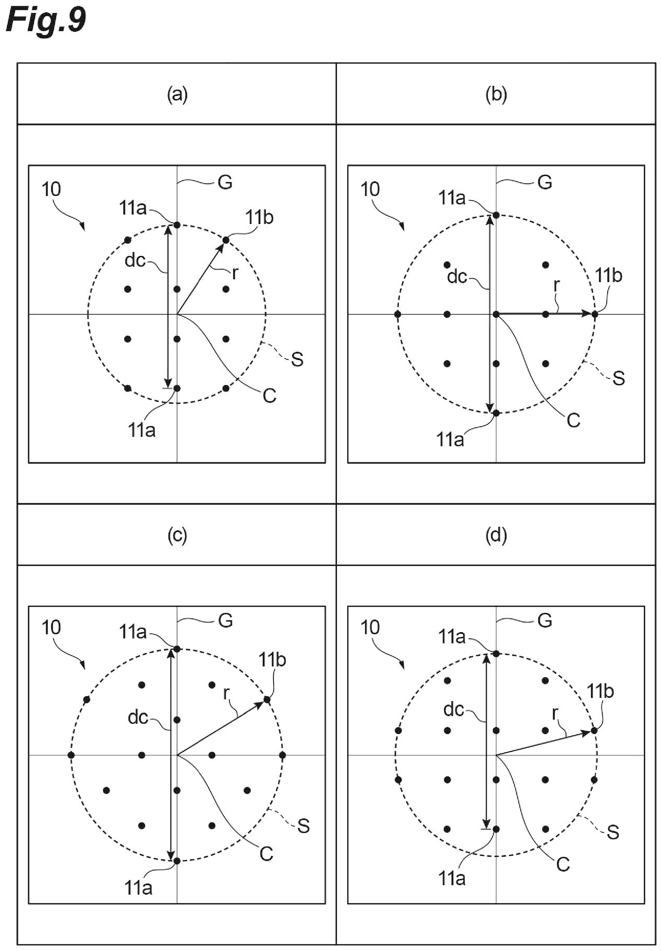

Next, another example of the arrangement of the plurality of cores including the pair of adjustment cores to be irradiated with light will be described with reference to FIG. 9. In the following description, the multicore fiber 10 will be described as an example, but the same applies to the multicore fibers 20, 30, and 40. Parts (a) and (b) of FIG. 9 illustrate a modification of the core arrangement in which the inter-core distance is increased in the 12-core multicore fiber, and parts (c) and (d) of FIG. 9 illustrate a modification of the core arrangement in which the inter-core distance is increased in the 16-core multicore fiber.

In the example illustrated in the part (a) of FIG. 9, the number of the adjustment cores 11a arranged on the observation axis G orthogonal to the light-irradiated surface 51a and passing through the fiber center C of the multicore fiber 10 is four, and the first adjustment core of the pair of adjustment cores 11a located on the outermost side is arranged at the position of the outer circumference S, and the second adjustment core is positioned slightly inside the outer circumference S. Each core 11 is arranged by shifting a part of the cores arranged in a square shape. According to the multicore fiber 10 with such a core arrangement, the distance dc between the pair of adjustment cores 11a is larger than the maximum radius r which is the distance between the fiber center C and the outermost core 11b farthest from the fiber center C in the radial direction among the plurality of cores 11. Specifically, in this example, if the minimum distance (core pitch) between the cores is 1, the maximum radius r is 1.80, whereas the inter-core distance dc is 3.30. In this case, since the distance dc between the adjustment cores 11a is longer than the maximum radius r, it is easy to eliminate the asymmetry and alignment can be performed accurately. Further, in the example illustrated in part (a) of FIG. 9, the plurality of cores 11 is arranged rotationally asymmetric. In this case, the rotation direction for alignment can be easily determined.

In the example illustrated in the part (b) of FIG. 9, the number of the adjustment cores 11a arranged on the observation axis G orthogonal to the light-irradiated surface 51a and passing through the fiber center C of the multicore fiber 10 is four, and among the adjustment cores 11a, both of the pair of adjustment cores 11a located on the outermost side are arranged at the position of the outer circumference S. Each core 11 is arranged by partially thinning out the cores arranged in a square shape. According to the multicore fiber 10 with such a core arrangement, the distance dc between the pair of adjustment cores 11a is larger than the maximum radius r which is the distance between the fiber center C and the outermost core 11b farthest from the fiber center C in the radial direction among the plurality of cores 11. Specifically, in this example, if the minimum distance (core pitch) between the cores is 1, the maximum radius r is 2.00, whereas the inter-core distance dc is 4.00. In this case, since the distance dc between the adjustment cores 11a is longer than the maximum radius r, it is easy to eliminate the asymmetry and alignment can be performed accurately. Further, in the example illustrated in part (b) of FIG. 9, the plurality of cores 11 is arranged rotationally asymmetric. In this case, the rotation direction for alignment can be easily determined.

In the example illustrated in the part (c) of FIG. 9, the number of the adjustment cores 11a arranged on the observation axis G orthogonal to the light-irradiated surface 51a and passing through the fiber center C of the multicore fiber 10 is four, and among the adjustment cores 11a, both of the pair of adjustment cores 11a located on the outermost side are arranged at the position of the outer circumference S. According to the multicore fiber 10 with such a core arrangement, the distance dc between the pair of adjustment cores 11a is larger than the maximum radius r which is the distance between the fiber center C and the outermost core 11b farthest from the fiber center C in the radial direction among the plurality of cores 11. Specifically, in this example, if the minimum distance (core pitch) between the cores is 1, the maximum radius r is 2.12, whereas the inter-core distance dc is 4.24. In this case, since the distance dc between the adjustment cores 11a is longer than the maximum radius r, it is easy to eliminate the asymmetry and alignment can be performed accurately. Further, in the example illustrated in part (c) of FIG. 9, the plurality of cores 11 is arranged rotationally asymmetric. In this case, the rotation direction for alignment can be easily determined.

In the example illustrated in the part (d) of FIG. 9, the number of the adjustment cores 11a arranged on the observation axis G orthogonal to the light-irradiated surface 51a and passing through the fiber center C of the multicore fiber 10 is four, and the first adjustment core of the pair of adjustment cores 11a located on the outermost side is arranged at the position of the outer circumference S, and the second adjustment core is positioned slightly inside the outer circumference S. According to the multicore fiber 10 with such a core arrangement, the distance dc between the pair of adjustment cores 11a is larger than the maximum radius r which is the distance between the fiber center C and the outermost core 11b farthest from the fiber center C in the radial direction among the plurality of cores 11. Specifically, in this example, if the minimum distance (core pitch) between the cores is 1, the maximum radius r is 2.06, whereas the inter-core distance dc is 3.56. In this case, since the distance dc between the adjustment cores 11a is longer than the maximum radius r, it is easy to eliminate the asymmetry and alignment can be performed accurately. Further, in the example illustrated in part (d) of FIG. 9, the plurality of cores 11 is arranged rotationally asymmetric. In this case, the rotation direction for alignment can be easily determined.

Next, another example of the arrangement of the plurality of cores including the pair of adjustment cores to be irradiated with light will be described with reference to FIG. 10. In the following description, the multicore fiber 10 will be described as an example, but the same applies to the multicore fibers 20, 30, and 40. Part (a) of FIG. 10 illustrates a general core arrangement in an 8-core multicore fiber, and part (b) of FIG. 10 illustrates a core arrangement at rotationally asymmetric positions by widening an inter-core distance in the 8-core multicore fiber.

In the part (a) of FIG. 10, eight cores 11 are arranged so as to be line-symmetric (left-right symmetric) with respect to the observation axis G orthogonal to the light-irradiated surface 51a and passing through the fiber center C of the multicore fiber. In addition, in this multicore fiber, the number of adjustment cores 11a arranged on the observation axis G is two, and the distance dc between the pair of adjustment cores 11a is equal to the maximum radius r which is the distance between the fiber center C and the outermost core 11b farthest from the fiber center C in the radial direction among the plurality of cores 11. Specifically, in this example, if the minimum distance (core pitch) between the cores is 1, the maximum radius r is 1.15, whereas the inter-core distance dc is 1.15. In this case, since the distance dc between the adjustment cores 11a is equal to the maximum radius r, it is not necessarily easy to eliminate the asymmetry.

In the part (b) of FIG. 10, similarly, the eight cores 11 are arranged so as to be line-symmetric (left-right symmetric) with respect to the observation axis G (reference line) orthogonal to the light-irradiated surface 51a and passing through the fiber center C of the multicore fiber 10. On the other hand, in the multicore fiber 10, the number of the adjustment cores 11a arranged on the observation axis G is two, and the first adjustment core 11a is arranged at the position of the outer circumference S and the second adjustment core 11a is moved in a direction away from the center C (downward in the drawing). According to the multicore fiber 10 with such an arrangement, the distance dc between the pair of adjustment cores 11a is larger than the maximum radius r which is the distance between the fiber center C and the outermost core 11b farthest from the fiber center C in the radial direction among the plurality of cores 11. Specifically, in this example, if the minimum distance (core pitch) between the cores is 1, the maximum radius r is 1.15, whereas the inter-core distance dc is 1.33. In this case, since the distance dc between the adjustment cores 11a is longer than the maximum radius r, it is easy to eliminate the asymmetry and alignment can be performed accurately. In addition, in this example, the cores 11 are arranged to be rotationally asymmetric. In this case, the rotation direction for alignment can be easily determined.

As described above, according to the optical fiber ribbon 1 according to the present embodiment, the distance dc between the pair of adjustment cores 11a located on the observation axis G that is a reference line and farthest from each other among the plurality of cores 11 is larger than the maximum radius r which is the distance between the fiber center C and the outermost core 11b farthest from the fiber center C in the radial direction among the plurality of cores 11. In this case, even if the number of cores is large in the plurality of multicore fibers, the asymmetry can be easily adjusted, and the detection accuracy of the core position in the multicore fiber can be improved. Therefore, according to this optical fiber ribbon, it is possible to accurately detect a core position in a ribbon fiber including a plurality of multicore fibers.

In addition, in the optical fiber ribbon 1 according to the present embodiment, the plurality of cores 11 may be disposed so as to be rotationally asymmetric in a case where the plurality of cores 11 rotates about the fiber center at an angle of 360/n degrees (n is any integer of 2 or more) (for example, 180 degrees, 120 degrees, 90 degrees, 72 degrees, and 51.43 degrees). In this case, since the cores 11 are arranged rotationally asymmetric, alignment can be performed by easily determining a rotation direction for core alignment.

Although the optical fiber ribbon and the method for manufacturing the same according to the present disclosure have been described in detail above, the present invention is not limited to the above embodiments, and can be applied to various embodiments and modifications. For example, in the above description, the optical fiber ribbon including four multicore fibers has been described, but the present invention is not limited thereto. That is, the content of the present disclosure may be applied to an optical fiber ribbon including two multicore fibers.

### Reference Signs List

1 Optical fiber ribbon
10 Multicore fiber
11, 11c, 11d, 11e, 11f Core
11a Adjustment core
11b Outermost core
12 Cladding
13, 23, 33, 43 Primary resin layer
14, 24, 34, 44 Secondary resin layer
15, 25, 35, 45 Supply roll
20, 30, 40 Multicore fiber
21, 31, 41 Core
22, 32, 42 Cladding
50 Coating member
51, 52, 53, 54 Coating portion
51a, 52a, 53a, 54a Light-irradiated surface
55, 56, 57 Recess
61 Die
62 Light irradiation device
63 Light receiving device
64 Controller
C Fiber center
G Observation axis (reference line)
S Outer circumference
dc Distance
r Maximum radius

## Claims

1. An optical fiber ribbon comprising:
a plurality of multicore fibers each having a plurality of cores and cladding covering the plurality of cores; and
a coating member at least partially covering the plurality of multicore fibers,
wherein, in at least one multicore fiber among the plurality of multicore fibers, the plurality of cores is eight or more cores, and is arranged to be line-symmetric with respect to a reference line passing through a fiber center in a cross section of the at least one multicore fiber, and
wherein a distance between a pair of adjustment cores located on the reference line and farthest from each other among the plurality of cores is larger than a maximum radius that is a distance between the fiber center and an outermost core farthest from the fiber center.

2. The optical fiber ribbon according to claim 1,
wherein at least one core of the pair of adjustment cores is disposed on a circumference centered on the fiber center on which the outermost core is disposed.

3. The optical fiber ribbon according to claim 1 or 2,
wherein, in the at least one multicore fiber, the plurality of cores is disposed so as to be rotationally asymmetric in a case where the plurality of cores rotates about the fiber center at an angle of 360/n degrees (n is any integer of 2 or more).

4. The optical fiber ribbon according to any one of claims 1 to 3,
wherein the plurality of cores is 12 cores.

5. The optical fiber ribbon according to any one of claims 1 to 3,
wherein the plurality of cores is 16 cores.

6. A method for manufacturing an optical fiber ribbon comprising:
preparing a plurality of multicore fibers each having a plurality of cores and cladding covering the plurality of cores;
covering each of the plurality of multicore fibers with a resin while arranging the plurality of multicore fibers in parallel with each other; and
irradiating a light-irradiated surface in a coating resin portion covering at least one multicore fiber among the plurality of multicore fibers with light and aligning an arrangement of the plurality of cores in the at least one multicore fiber based on a result of the light irradiation,
wherein, in the at least one multicore fiber, the plurality of cores is eight or more cores, and is arranged to be line-symmetric with respect to a reference line passing through a fiber center in a cross section of the at least one multicore fiber,
wherein a distance between a pair of adjustment cores located on the reference line and farthest from each other among the plurality of cores is larger than a maximum radius that is a distance between the fiber center and an outermost core farthest from the fiber center, and
wherein the aligning the arrangement of the cores arranges the at least one multicore fiber such that the reference line of the at least one multicore fiber intersects the light-irradiated surface, irradiates the light-irradiated surface with light, and performs alignment of the plurality of cores of the at least one multicore fiber using an image transmitted through the pair of adjustment cores.
